(19) Europäisches Patentamt
European Patent Office
Office européen des brevets

(11) Veröffentlichungsnummer: **0 267 406 B1**

(12) **EUROPÄISCHE PATENTSCHRIFT**

(45) Veröffentlichungstag der Patentschrift: **02.01.92**

(51) Int. Cl.$^5$: **C07F 7/18**

(21) Anmeldenummer: **87114247.7**

(22) Anmeldetag: **30.09.87**

(54) **Verfahren zur Herstellung von Alkoxysilanen.**

(30) Priorität: **10.10.86 DE 3634524**

(43) Veröffentlichungstag der Anmeldung:
**18.05.88 Patentblatt 88/20**

(45) Bekanntmachung des Hinweises auf die Patenterteilung:
**02.01.92 Patentblatt 92/01**

(84) Benannte Vertragsstaaten:
**DE FR GB**

(56) Entgegenhaltungen:
**GB-A- 2 005 287**

(73) Patentinhaber: **BAYER AG**
**W-5090 Leverkusen 1 Bayerwerk(DE)**

(72) Erfinder: **Fröhlen, Hans Günter**
**Im Holzhausen 92**
**W-5090 Leverkusen 3(DE)**

**EP 0 267 406 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Herstellung von monomeren Alkoxysilanen durch Umsetzung von Chlorsilanen mit Alkoholen in Anwesenheit von Trialkylphosphiten.

Es ist bereits bekannt, daß die Herstellung von Alkoxysilanen durch Umsetzung von Chlorsilanen mit Alkoholen sowohl in der Gasphase als auch in flüssiger Phase erfolgen kann. Gasphasenreaktionen werden beispielsweise beschrieben DE-A 3 236 628, DE-A 2 061 189 und DE-A 3 000 782. Reaktionen in flüssiger Phase, z.B. die Umsetzung von Chlorsilanen mit Alkoholen in einem Rührwerkbehälter beschreibt die britische Patentschrift 647 137. Ebenso sind Verfahren bekannt, bei denen der entstehende Chlorwasserstoff mittels Inertgasen ausgetrieben wird (DE-B 862 895).

Alle diese Verfahren unterscheiden sich also dadurch voneinander, wie der bei der Veresterung entstehende Chlorwasserstoff entfernt wird. Die schnelle Beseitigung des Chlorwasserstoffs aus dem Reaktionsgemisch ist zwingend notwendig, um eine vollständige Umsetzung zu gewährleisten, ein chlorwasserstofffreies Produkt zu erhalten und unerwünschte Nebenreaktionen, wie z.B. die Bildung von Polysiloxanen zu verhindern. Um das zu erreichen, sind aufwendige und komplizierte Anlagen erforderlich, die wegen des entstehenden Chlorwasserstoffs zusätzlich aus teuren Werkstoffen gefertigt werden müssen. Die Entfernung letzter Reste von -Si-Cl-Gruppen ist zusätzlich schwierig.

Die von A. Gancberg und J. Vandevelde in Industrie Chemique Belge Nr. 6, 591 (1964) beschriebene Methode, Alkoxysilane durch Umsetzung von Alkylorthoformiaten zu erhalten, ist schon aus Kostengründen technisch kaum realisierbar. Außerdem fallen hierbei große Mengen Alkylformiate an.

Es bestand daher die Aufgabe, ein Verfahren zu finden, das die Herstellung von monomeren Alkoxysilanen erlaubt, welches die Nachteile der bisher bekannten Verfahren umgeht. Diese technische Aufgabe löst die vorliegende Erfindung in der Weise, daß bei der Veresterung von Chlorsilanen mit Alkoholen durch Zusatz von stöchiometrischen Mengen von Trialkylphosphiten, welche technisch gut zugängliche und im großen Maßstab hergestellte Produkte darstellen, nur verwertbare Produkte erhalten werden: neben Alkoxysilanen, Dialkylphosphite und Alkylchloride. Im Falle der Verwendung von Trimethylphosphit erhält man also neben dem gewünschten Methoxysilan Dimethylphosphit, das z.B. als Ausgangsprodukt für Insektizide und Phosphonocarbonsäuren Anwendung findet und Methylchlorid, das z.B. Einsatz in der Rochow-Synthese der Methylchlorsilane finden kann.

Gegenstand der Erfindung ist somit ein Verfahren zur Herstellung von Alkoxysilanen der allgemeinen Formel

$R_x^1Si(OR^2)_{4-x}$

wobei

- $R^1$ unabhängig voneinander für Wasserstoff oder für einen gegebenenfalls substituierten $C_1$-$C_4$-Alkyl- bzw. Alkenylrest oder für einen gegebenenfalls substituierten Arylrest mit bis zu 10 C-Atomen steht,
- $R^2$ für einen Alkylrest mit bis zu 4 C-Atomen steht und
- X den Wert 0, 1, 2 oder 3 annimmt,

welches dadurch gekennzeichnet ist, daß man Halogensilane, insbesondere Chlorsilane mit einwertigen Alkoholen und Trialkylphosphiten umsetzt.

Die nach dem beanspruchten Verfahren als Ausgangsprodukte einzusetzenden Chlorsilane entsprechen der allgemeinen Formel:

$R_x^1SiCl_{4-x}$

wobei x den Wert 3, 2, 1 oder 0 haben kann und $R^1$ unabhängig voneinander für Wasserstoff oder für einen gegebenenfalls substituierten $C_1$-$C_4$-Alkyl- bzw. Alkenylrest, einem gegebenenfalls substituierten Arylrest oder auch für gleichzeitig verschiedenartige oben bezeichnete Reste stehen kann. Anstelle von Chlorsilanen können auch Brom- oder Jodsilane eingesetzt werden.

Das erfindungsgemäße Verfahren laßt sich in seiner allgemeinen Form durch nachfolgende Gleichung darstellen:

$$R_x^1SiCl_{4-x} + (4-x)R^2OH + (4-x)(R^2O)_3P \longrightarrow$$

$$R_x^1Si(OR^2)_{4-x} + (4-x)(R^2O)_2P(=O)-H + (4-x)R^2Cl$$

Als Ausgangsprodukte können beispielsweise folgende Chlorsilane eingesetzt werden: Siliciumtetrachlorid, Trichlorsilan, Dimethyldichlorsilan, Trimethylchlorsilan, Vinyltrichlorsilan, 1-Chlormethyltrichlorsilan, Isobutyltrichlorsilan, 2-Cyanoethyltrichlorsilan, Phenyltrichlorsilan, Diphenyldichlorsilan, Methylphenyldichlorsilan, Methylvinyldichlorsilan, Methyltrichlorsilan, Ethyltrichlorsilan, 3-Chlorpropyltrichlorsilan.

Es besteht auch die Möglichkeit, Gemische verschiedener Chlorsilane zum Einsatz zu bringen.

Die erfindungsgemäß einzusetzenden Trialkylphosphite $(R^2O)_3P$, können z.B. sein: Trimethylphosphit, Triethylphosphit, Triisopropylphosphit oder Tris-(2-ethylhexyl)phosphit, wobei den niedrigsiedenden und technisch leicht zugänglichen Methyl- und Ethylderivaten der Vorzug zu geben ist. Auch die technische Verwendbarkeit der Alkylhalogenide ist ein Auswahlkriterium. Zur Vermeidung eines Ligandenaustausches ist es zweckmäßig, daß die Reste $R^2$ in den Alkoholen und $R^2$ in den Trialkylphosphiten identisch sind.

Das erfindungsgemäße Verfahren kann z.B. in der Weise durchgeführt werden, daß man das Trialkylphosphit und den entsprechenden Alkohol vorlegt und das Chlorsilan zugibt. Es ist aber auch möglich Trialkylphosphit und Chlorsilan vorzulegen und den entsprechenden Alkohol zuzugeben. Auch dieser Weg führt zum gewünschten Ergebnis. Neben einer diskontinuierlichen Herstellungsweise besteht weiterhin die Möglichkeit, die gewünschten Alkoxysilane auf kontinuierliche Weise herzustellen. In diesem Falle dosiert man die Ausgangsverbindungen getrennt in den ersten Reaktor einer mehrstufigen z.B. zweistufigen Reaktionskaskade.

Die Mengen der Ausgangskomponenten werden bevorzugt so gewählt, daß auf jedes Grammatom Si-gebundenes Halogen 1 Mol Trialkylphosphit und 1 Mol Alkohol kommt.

Sind die Reste $R^2$ z.B. $CH_3$ oder $C_2H_5$, entweicht bei der Reaktion ein Teil des enstehenden Alkylhalogenids $R^2Cl$ gasförmig. Dem Fachmann ist bekannt, wie in solchen Fällen eine Gewinnung des Alkylchlorids erfolgen kann.

Die meist exotherme Reaktion soll bei Temperaturen zwischen etwa -20 °C und +80 °C durchgeführt werden, wobei ein Bereich von 40 bis 70 °C aus praktischen Gründen bevorzugt wird. Damit ist nicht gesagt, daß die Reaktion bei noch tieferen oder noch höheren Temperaturen nicht ebenfalls beherrschbar ist. Im allgemeinen ist der Reaktionsablauf im bevorzugten Temperaturbereich sehr schnell. Bei diskontinuierlichen Ansätzen ist die Reaktionsdauer z.B. nur durch die Geschwindigkeit der Wärmeabführung bzw. durch die Beherrschung der entweichenden Menge an Methylchlorid begrenzt. Ein Nacherhitzen zur Beendigung von Reaktionen ist nicht erforderlich. Bei der kontinuierlichen Reaktionsführung gelten die gleichen Kriterien, begrenzend sind die physikalischen Parameter der Stoffzu- und -abfuhr, der Wärmeabfuhr, etc.

Die Aufarbeitung des ausreagierten Rohgemisches erfolgt destillativ. Dabei kann je nach Art des Rückflußkühlers ein mehr oder weniger großer Teil der niedrigsiedenden Alkylhalogenide schon bei der Reaktion relativ rein entweichen und z.B. in Tiefkühlfallen aufgefangen werden.

Die destillative Trennung erfolgt im übrigen in der dem Fachmann bekannten Weise mit Hilfe von absatzweiser oder kontinuierlicher Destillation über Kolonnen ausreichender Trennleistung. Dabei kann es zweckmäßig sein, die zumeist als Hochsieder anfallenden Dialkylphosphite unter reduziertem Druck zu destillieren.

Falls der Siedeunterschied zwischen dem Ausgangsmaterial Trialkylphosphit und dem enstandenden Alkoxysilan nur gering ist (Beispiel Methyltrimethoxysilan: Kp 103 °C, Trimethylphosphit: Kp 108 °C),kann man durch Fehldosierung vorhandene Spuren der stark geruchsbelästigenden Trialkylphosphite durch spezielle Maßnahmen beseitigen. Dazu bieten sich die Addition von Schwefel (Kp $(CH_3O)_3PS$ = 186 °C) und die Arbuzov-Umlagerung (Kp $CH_3P(O)(OCH_3)_2$ = 175 °C) besonders an. Anschließend ist eine einfache destillative Trennung möglich.

Die erfindungsgemäß hergestellten Alkoxysilane eignen sich z.B. als Vernetzer in kalthärtenden Siliconmassen, als Ausgangsmaterial zur Herstellung von Beschichtungsmaterialien (z.B. für die Kratzfestausrüstung), für Silicon-Harze und wasserdispergierbaren Kieselsäuren.

Das erfindungsgemäße Verfahren soll anhand der folgenden Beispiele noch näher erläutert werden.

Beispiel 1

System: $(CH_3)_3SiCl/(CH_3O)_3P$ + $CH_3OH$

In einem 250 ml Dreihalskolben mit Rührer, Thermometer, Tropftrichter, Rückflußkühler und einer dahintergeschalteten Trockeneiskühlfalle, werden 55 g (0,5 Mol) Trimethylchlorsilan und 62 g (0,5 Mol) Trimethylphosphit vorgelegt. Unter Rühren gibt man innerhalb 10 Minuten 16 g (0,5 Mol) Methanol zu. Durch Wasserkühlung von außen hält man die Reaktionstemperatur auf etwa 20 °C. Nach beendeter Zugabe des Methanols wird das Reaktionsgemisch zum Sieden erhitzt, um das teilweise gelöste Methylchlorid auszutreiben. Im Reaktionsgemisch stellt sich dabei eine Temperatur von ca. 65 °C ein.

Die in der Kühlfalle aufgefangene Methylchloridmenge beträgt 24,5 g (= 97 % der Theorie).

Das Gewicht des Rohproduktgemisches beträgt 103 g. Das hiervon erstellte Gaschromatogramm enthält folgende Hauptbestandteile:
48,7 % Trimethylmethoxysilan (= 96,4 % der Theorie)
47,5 % Dimethylphosphit (= 89 % der Theorie).

Beispiel 2

System: $(CH_3O)_3P/CH_3OH$ + $(CH_3)_3SiCl$

In einer Apparatur enstprechend Beispiel 1 werden 62 g (0,5 Mol) Trimethylphosphit und 16 g (0,5 Mol) Methanol vorgelegt und zum Sieden erhitzt. Die Temperatur in der vorgelegten Mischung stellt sich auf 67 °C ein. Während der Zugabe (15 Minuten) von 55 g (0,5 Mol) Trimethylchlorsilan fällt die Temperatur im Reaktionsgemisch auf 46 °C.

Nach der destillativen Aufarbeitung erhält man folgende Ausbeuten:
24 g Methylchlorid (= 95,1 % der Theorie)
48 g Trimethylmethoxysilan (= 92,3 % der Theorie)
52 g Dimethylphosphit (= 94,5 % der Theorie)
2,4 g höhersiedender Rückstand.

Beispiel 3

System: $(C_2H_5O)_3P/C_2H_5OH$ + $(CH_3)_2SiCl_2$

In einer dem Beispiel 1 analogen Apparatur, nur mit einem 500 ml Dreihalskolben ausgestattet, werden 166 g (1 Mol) Triethylphosphit und 46 g (1 Mol) Ethanol vorgelegt. Bei Raumtemperatur beginnend werden innerhalb einer halben Stunde 65 g (0,5 Mol) Dimethyldichlorsilan zugegeben. Die Temperatur steigt schnell an und wird bei 50 °C durch Wasserkühlung abgefangen und während der Chlorsilan-Zugabe auf dieser Höhe gehalten.

Nach gaschromatographischer Auswertung erhält man folgendes Ergebnis:
21,9 % Ethylchlorid (= 93,9 % der Theorie)
24,0 % Dimethyldiethoxysilan (= 91,5 % der Theorie)
47,9 % Dimethylphosphit (= 96 % der Theorie).

Beispiel 4

System: $(CH_3O)_3P/CH_3OH$ + $SiCl_4$

Beschrieben wird die Reaktion zwischen Siliciumtetrachlorid und Methanol in Gegenwart von Trimethylphosphit.

Hierzu werden in einer Apparatur entsprechend (Beispiel 1, 124 g (1 Mol) Trimethylphosphit und 32 g (1 Mol) Methanol vorgelegt. Zugegeben werden innerhalb 10 Minuten 42,5 g (0,25 Mol) Siliciumtetrachlorid. Mittels eines Wasserbads wird die Reaktionswärme abgeführt, so daß sich eine Reaktionstemperatur von 40 °C einstellt. Nach beendeter Zugabe wird erhitzt und somit der größte Teil des Methylchlorids ausgetrieben. Die Rückflußtemperatur stellt sich bei 120 °C ein.

Auswaage Methylchlorid (Kühlfalle):
48,5 g (= 96 % der Theorie).

Die gaschromatographische Analyse des Rohproduktgemisches hat folgende Zusammensetzung:

23,6 % Tetramethoxysilan (= 91,4 % der Theorie)
73,1 % Dimethylphosphit (= 98,4 % der Theorie).

Beispiel 5

System: $(CH_3O)_3P/CH_3OH$ + $CH_2=CH\text{-}SiCl_3$

Zur Herstellung von Vinyltrimethoxysilan bedient man sich eines Reaktors wie im Beispiel 1 beschrieben, jedoch versehen mit einem Dreihalskolben von 1 l Inhalt.

Zu einer Mischung von 372 g (3 Mol) Trimethylphosphit und 96 g (3 Mol) Methanol gibt man innerhalb einer Stunde 162 g (1 Mol) Vinyltrichlorsilan. Durch Wasserkühlung wird die Temperatur im Reaktionsgefäß zwischen 40 und 50 ° C gehalten. Nach beendeter Chlorsilanzugabe wird das Reaktionsgemisch zum Sieden erhitzt, wobei sich im Reaktionsgut eine Temperatur von etwa 110 ° C einstellt.

Die gaschromatographische Auswertung des Rohprodukts liefert folgende Hauptpeaks:
29,4 % Vinyltrimethoxysilan (= 94,9 % der Theorie)
67,6 % Dimethylphosphit (= 97,9 % der Theorie).

Beispiel 6

System: $(CH_3O)_3P/CH_3OH$ + 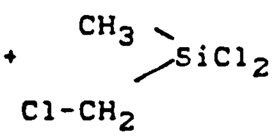

In einer Apparatur analog Beispiel 5 werden 248 g (2 Mol) Trimethylphosphit und 64 g (2 Mol) Methanol vorgelegt. Unter Rühren werden innerhalb 30 Minuten 164 g (1 Mol) Methylchlormethyldichlorsilan zugegeben. Durch Kühlung wird die Reaktionstemperatur auf 50 ° C gehalten. Nach der destillativen Aufarbeitung werden folgende Produktmengen erhalten:
99,0 g Methylchlorid (≙ 98,0 % der Theorie)
143,5 g Methylchlormethyldimethoxysilan (≙ 92,8 % der Theorie)
201,0 g Dimethylphosphit (≙ 91,3 % der Theorie).

Beispiel 7

System: $(CH_3O)_3P/CH_3OH$ + $(C_6H_5)_2SiCl_2$

In einer dem Beispiel 3 analogen Apparatur legt man 124 g (1 Mol) Trimethylphosphit und 32 g (1 Mol) Methanol vor und gibt innerhalb 20 Minuten 126,5 g (0,5 Mol) Diphenyldichlorsilan zu. Die Reaktionstemperatur wird durch Wasserkühlung so gestaltet, daß 40 ° C im Reaktionsgut nicht überschritten werden. Nach Abklingen der exothermen Phase, wird das ausreagierte Produkt zwecks Austreibung des restlichen noch gelösten Methylchlorids bis 120 ° C erhitzt. Aufgefangene Methylchlorid-Menge:
46 g (≙ 90 % der Theorie).

Das Gewicht der Rohproduktmischung beträgt 467 g.

Das hiervon erstellte Gaschromatogramm hat folgende Zusammensetzung:
1,0 % Methylchlorid (≙ 9,3 % der Theorie)
47,0 % Dimethylphosphit (≙ 99,7 % der Theorie)
48,9 % Diphenyldimethoxysilan (≙ 93,6 % der Theorie).

Beispiel 8

System: $(CH_3O)_3P/CH_3OH$ + 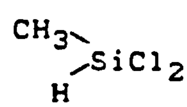

In einer dem Beispiel 1 analogen Apparatur werden 62 g (0,5 Mol) Trimethylphosphit und 16 g (0,5 Mol) Methanol vorgelegt. Bei einer Temperatur von 30 bis 35 °C im Reaktionsgut werden innerhalb 15 Minuten 29 g (0,25 Mol) Methyldichlorsilan zugegeben. Die Reaktionswärme wird durch Wasserkühlung abgeführt.

Nach beendeter Zugabe wird das Reaktionsgemisch erhitzt bis Rückfluß einsetzt.

Methylchlorid (Kühlfalleninhalt):
26 g (≙ 100 % der Theorie)
Auswaage des restlichen Reaktionsgemisches: 82 g.

Die gaschromatographische Auswertung hat folgendes Ergebnis:
29,5 % Methyldimethoxysilan (≙ 90,7 % der Theorie)
63,7 % Dimethylphosphit (≙ 94,4 % der Theorie)

Beispiel 9

System: $(CH_3O)_3P/CH_3OH$ + $(CH_3)_2SiCl_2$

In einer dem Beispiel 5 analogen Apparatur legt man 248 g (2,0 Mol) Trimethylphosphit und 64 g (2,0 Mol) Methanol vor und gibt innerhalb von 30 Minuten 125 g (1,0 Mol) Dimethyldichlorsilan hinzu. Durch Außenkühlung (Wasserbad) wird die Reaktionstemperatur bei 50 °C gehalten. Das über den Wasserkühler entweichende Methylchlorid wird in einer mit Trockeneis gekühlten Falle kondensiert. Um Restmengen des Methylchlorids auszutreiben, erhitzt man das Reaktionsgemisch, bis bei 95 °C Rückfluß eintritt. Das verbleibende Dimethyl-dimethoxysilan/Dimethylphosphit-Gemisch wird zur Trennung über eine mit 6 mm Porzellansattelkörpern beschickte 1 m-Kolonne (Innendurchmesser 50 mm) bei einem Rücklaufverhältnis von 1:1 zunächst bei Normaldruck destilliert. Unter diesen Bedingungen erhält man 95 % der zu erwartenden Menge an Dimethyldimethoxysilan. Um die Überhitzung des zurückgebliebenen Dimethylphosphits zu vermeiden, wird der Druck auf 15 mbar vermindert.

Nach beendeter Aufarbeitung werden 109 g (91,0 % der Theorie) Dimethyldimethoxysilan mit einer Reinheit von 99,9 % und 212 g Dimethylphosphit (96,4 % der Theorie) mit einer Reinheit von 99,8 % erhalten.

Beispiel 10

System: $CH_3SiCl_3/(CH_3O)_3P/CH_3OH$, kontinuierlich

In den ersten Reaktor einer aus Glas mit Teflonverbindungen bestehenden Reaktionskaskade mit innenliegenden Kühlschlangen aus Metall und einem Inhalt von 0,5 l je Reaktor, werden pro Stunden 397 ml (504 g ) Methyltrichlorsilan, 410 ml (324 g) Methanol und 1.194 ml (1.255 g) Trimethylphosphit mit Dosierpumpen eindosiert und unter Rühren zur Reaktion gebracht. Mit Hilfe der Kühlschlangen wird die Reaktionstemperatur in beiden Stufen bei 40 °C gehalten. Die mittlere Verweilzeit in der Anlage beträgt etwa 0,5 Stunden. Das über die Wasserkühler entweichende Methylchlorid wird in einer mit Trockeneis gekühlten Falle aufgefangen. Die Ablaufprobe von Reaktor 2 hat nach gaschromatographischer Auswertung folgende Zusammensetzung:
22,9 % Methylchlorid
26,3 % Methyltrimethoxysilan
49,3 % Dimethylphosphit.

Zur Ausbeutebestimmung wird genau eine Stundenmenge aus dem Produktstrom abgezweigt und destillativ aufgearbeitet. Hieraus werden folgende Reinproduktmengen erhalten:
Methyltrimethoxysilan 428,5 g (≙ 93,5 % der Theorie)
Dimethylphosphit 1.070,9 g (≙ 96,3 % der Theorie)
Methylchlorid 504,4 g (≙ 98,8 % der Theorie).

Beispiel 11

System: $CH_3(CH_2=CH)SiCl_2/(CH_3O)_3P/CH_3OH$, kontinuierlich

Die Herstellung von Methylvinyldimethoxysilan erfolgt ebenfalls in der zur Herstellung von Methyltrimethoxysilan analogen Reaktionskaskade. Durchsatzmengen und Reaktionstemperatur werden etwa gleich gestaltet wie die der Methyltrimethoxysilan-Herstellung.

Ausbeuten:

Methylvinyldimethoxysilan 90,6 % der Theorie
Dimethylphosphit 97,2 % der Theorie
Methylchlorid 99,0 % der Theorie.

## Patentansprüche

1. Verfahren zur Herstellung von Alkoxysilanen der allgemeinen Formel

   $R_x^1Si(OR^2)_{4-x}$

   wobei

   $R^1$ unabhängig voneinander für Wasserstoff, für einen gegebenenfalls substituierten $C_1$-$C_4$-Alkyl- bzw. Alkenylrest oder für einen gegebenenfalls substituierten Arylrest mit bis zu 10 C-Atomen steht,
   $R_2$ für einen Alkylrest mit bis zu 4 C-Atomen steht und
   x den Wert 0, 1, 2 oder 3 annimmt,

   dadurch gekennzeichnet, daß man Halogensilane, insbesondere Chlorsilane mit einwertigen Alkoholen und Trialkylphosphiten umsetzt.

2. Verfahren nach Anspruch 1, dadurch gekennzeichnet, daß die Ausgangskomponenten in solchen Mengen eingesetzt werden, daß auf jedes Grammatom Si-gebundenes Halogen, insbesondere Chlor, 1 Mol Trialkylphosphit und 1 Mol Alkohol kommt.

## Claims

1. A process for the production of alkoxysilanes corresponding to the following general formula

   $R_x^1Si(OR^2)_{4-x}$

   in which
   $R^1$ independently represent hydrogen, an optionally substituted $C_{1-4}$ alkyl or alkenyl radical or an optionally substituted aryl radical containing up to 10 C atoms,
   $R^2$ is an alkyl radical containing up to 4 C atoms and
   x assumes the value 0, 1, 2 or 3,
   characterized in that halosilanes, more particularly chlorosilanes, are reacted with monohydric alcohols and trialkyl phosphites.

2. A process as claimed in claim 1, characterized in that the starting components are used in such quantities that there is 1 mol trialkyl phosphite and 1 mol alcohol for every gram-atom Si-bound halogen, more particularly chlorine.

## Revendications

1. Procédé de préparation d'alkoxysilanes de formule générale

   $R_x^1Si(OR^2)_{4-x}$

   dans laquelle
   $R^1$ représente, indépendamment, l'hydrogène, un reste alkyle ou alcényle éventuellement substitué en $C_1$ à $C_4$ ou un reste aryle éventuellement substitué ayant jusqu'à 10 atomes de carbone,
   $R^2$ est un reste alkyle ayant jusqu'à 4 atomes de carbone et
   x a la valeur 0, 1, 2 ou 3,
   caractérisé en ce qu'on fait réagir des halogénosilanes, notamment des chlorosilanes, avec des alcools

monovalents et des phosphites de trialkyle.

**2.** Procédé suivant la revendication 1, caractérisé en ce que les composants de départ sont utilisés en quantités telles qu'il y ait 1 mole de phosphite de trialkyle et 1 mole d'alcool par atome-gramme d'halogène, notamment de chlore, lié au silicium.